# FASCICULE DE BREVET EUROPEEN

(11) **EP 2 328 751 B1**
(45) Date de publication et mention de la délivrance du brevet: **09.09.2015**
(21) Numéro de dépôt: 09740350.5
(22) Date de dépôt: 17.07.2009
(51) Int. Cl.: B32B 38/12, B29C 44/56, B29C 51/14, B60N 2/58

(54) **FORMAGE DE GARNITURES POUR SIÈGES DE VÉHICULE AUTOMOBILE**
HERSTELLUNG VON FAHRZEUGSITZPOLSTERN
MOTOR VEHICLE SEAT UPHOLSTERY FORMATION

(30) Priorité: 24.07.2008 FR 0855067; 16.03.2009 FR 0951649
(43) Date de publication de la demande: 08.06.2011
(73) Titulaire: FAURECIA Sièges d'Automobile, 92000 Nanterre (FR)
(72) Inventeur: BESNARD, Nicolas, F-45300 Sermaises (FR); COUEDRO, Régis, F-91150 Etampes (FR); ETIENNE, Fabrice, F-90000 Belfort (FR); POULET, Etienne, F-70220 Saint Bresson (FR)
(74) Mandataire: Thibon, Laurent
(86) Numéro de dépôt international: PCT/FR2009/051434
(87) Numéro de publication internationale: WO 2010/010281

(56) Documents cités:
- EP-A1- 0 387 230
- EP-A2- 0 396 305
- WO-A1-91/14566
- GB-A- 2 006 667
- US-A- 4 792 111
- US-A1- 2003 215 601

## Description

### Domaine de l'invention

La présente invention concerne de façon générale les sièges pour véhicules automobiles et, plus particulièrement, la réalisation de garnitures d'un élément de siège (assise, dossier, appui-tête, accoudoir).

### Exposé de l'art antérieur

Les garnitures de sièges pour véhicules automobiles se présentent généralement sous la forme d'une matelassure revêtue d'une coiffe. La matelassure est un bloc de mousse, généralement moulé selon la forme finale souhaitée pour l'élément de siège. Ce bloc est assemblé à une armature du siège et est ensuite revêtu d'une coiffe en textile (tissé ou non), en peau ou en matière synthétique. La souplesse de la coiffe lui permet de s'adapter à la forme donnée à la matelassure, en particulier aux éventuels rappels de style définis par la matelassure. Dans certains cas, la coiffe comporte, en face intérieure (non apparente), une fine épaisseur de mousse (l'ensemble présente alors une épaisseur uniforme de l'ordre de 1 à 5 millimètres).

Une matelassure est donc dédiée à un siège car elle doit à la fois s'assembler sur l'armature et conférer à l'élément sa forme finale, la coiffe souple ne venant qu'habiller la matelassure.

Le document EP 0396305 décrit un procédé de réalisation d'un siège de véhicule avec une face apparente stylisée.

Le document GB 2006667 décrit un procédé de fabrication d'un élément de couverture d'un coussin de siège.

Il serait souhaitable de pouvoir standardiser des blocs de mousse formant un élément de siège pour différents rappels de style.

Il serait également souhaitable de pouvoir réaliser un tel élément avec des zones ayant des densités et/ou des duretés différentes.

### Résumé

Un objet de la présente invention est de pallier tout ou partie des inconvénients des techniques connues de réalisation d'une garniture de siège.

Un objet d'un mode de réalisation de la présente invention est de proposer la réalisation d'un bloc de mousse formant un élément de siège pour différents rappels de style.

Un objet d'un autre mode de réalisation de la présente invention est de réaliser un tel élément avec des zones ayant des densités et/ou des duretés différentes.

Pour atteindre tout ou partie de ces objets ainsi que d'autres, il est prévu un procédé de réalisation d'une garniture d'un élément de siège pour véhicule automobile, dans lequel :
un bloc support en mousse est réalisé pour s'adapter à un élément d'armature ;
un élément de couverture est réalisé par formage à froid d'une mousse pulvérisée sur un substrat en polypropylène et rapportée à l'envers d'un matériau textile, en peau ou en matière synthétique, pour définir la forme apparente de l'élément de siège ; et
l'élément de couverture est rapporté sur le bloc support.

Selon un mode de réalisation de la présente invention, l'élément de couverture est fixé au bloc support par des moyens auto-agrippants.

Selon un mode de réalisation de la présente invention, l'élément de couverture est fixé au bloc support par des clips reçus dans des réglettes adaptées surmoulées dans le bloc support.

Selon un mode de réalisation de la présente invention, le matériau textile en peau ou en matière synthétique de l'élément de couverture enveloppe au moins partiellement le bloc support.

Selon un mode de réalisation de la présente invention, l'élément de couverture comporte des mousses ayant des densités et/ou des duretés différentes.

Selon un mode de réalisation de la présente invention, la face du bloc support destinée à recevoir l'élément de couverture est adaptée à plusieurs éléments de couverture ayant des faces apparentes de formes différentes.

Il est également prévu une garniture pour élément de siège de véhicule automobile comportant :
un bloc support en mousse destiné à s'adapter à un élément d'armature du siège ; et
un élément de couverture définissant la forme et la finition d'au moins une face apparente de l'élément de siège, ledit élément de couverture étant rapporté sur le bloc support et étant réalisé par formage à froid d'une mousse pulvérisée sur un substrat en polypropylène et rapportée à l'envers d'un matériau textile, en peau ou en matière synthétique.

Selon un mode de réalisation de la présente invention, ledit élément de couverture comporte des éléments de fixation destinés à coopérer avec des éléments correspondants portés par le bloc support.

Selon un mode de réalisation de la présente invention, l'élément de couverture présente une épaisseur non uniforme comprise entre 1 et 50 mm.

Selon un mode de réalisation de la présente invention, l'élément de couverture comporte des moyens auto-agrippants de fixation au bloc support.

Selon un mode de réalisation de la présente invention, l'élément de couverture comporte des clips destinés à coopérer avec des réglettes surmoulées dans le bloc support.

Selon un mode de réalisation de la présente invention, le matériau textile en peau ou en matière synthétique de l'élément de couverture enveloppe au moins partiellement le bloc support.

Selon un mode de réalisation de la présente invention, l'élément de couverture comporte des mousses ayant des densités et/ou des duretés différentes.

Selon un mode de réalisation de la présente invention, le bloc support comporte une face adaptée à plusieurs éléments de couverture ayant des faces apparentes de formes différentes.

Il est en outre prévu un siège pour véhicule automobile comportant au moins une telle garniture.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue latérale schématique d'un siège pour véhicule automobile ;
les figures 2A, 2B et 2C sont des vues en perspective illustrant un mode de réalisation d'une garniture d'un élément de siège ;
les figures 3A, 3B, 3C, 3D et 3E illustrent un mode de réalisation d'un élément de couverture ;
les figure 4A à 4D illustrent une mode de fixation d'un élément de couverture ; et
les figures 5A et 5B illustrent un autre mode de maintien d'un élément de couverture.

De mêmes éléments ont été désignés par de mêmes références aux différentes figures qui ont été tracées sans respect d'échelle.

### Description détaillée

Par souci de clarté, seuls les étapes et éléments utiles à la compréhension de l'invention ont été représentés et seront décrits. En particulier, la réalisation des autres parties du siège n'a pas été détaillée, l'invention étant compatible avec toute réalisation habituelle d'une garniture rapportée sur une armature.

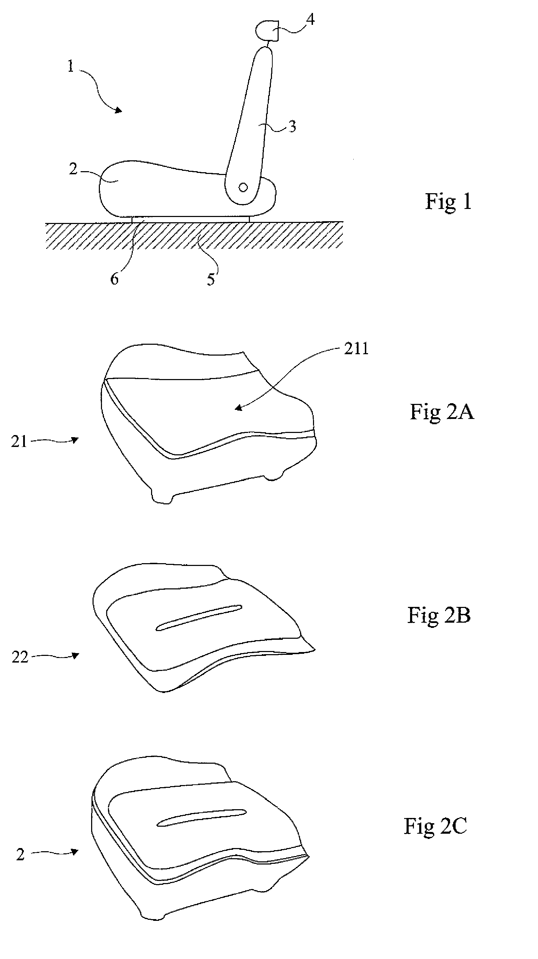

La figure 1 est une vue latérale schématique d'un siège 1 pour véhicule automobile. Un tel siège comporte une assise 2 sur laquelle est articulé un dossier 3, le plus souvent surmonté d'un appui-tête 4. L'assise 2, le dossier 3 et l'appui-tête 4 comportent chacun une garniture fixée sur son armature, généralement métallique. L'armature 6 de l'assise 2 peut être liée au plancher 5 du véhicule par un mécanisme à glissières. Le siège 1 peut également comporter un ou plusieurs accoudoirs (non représentés).

Les figures 2A, 2B et 2C sont des vues en perspective illustrant la réalisation d'une garniture d'un élément de siège (par exemple, d'assise 2).

Un bloc support 21 en mousse (figure 2A) est réalisé sans rappel de style (sans nervure). La différence par rapport à une garniture habituelle réside dans sa face supérieure 211 qui ne définit pas la forme finale apparente.

Le bloc support 21 est destiné à recevoir un élément 22 (figure 2B) de couverture ou de coiffe textile (tissée ou non), en peau ou en matière synthétique et définissant la forme finale (rappel de style) de l'élément de siège.

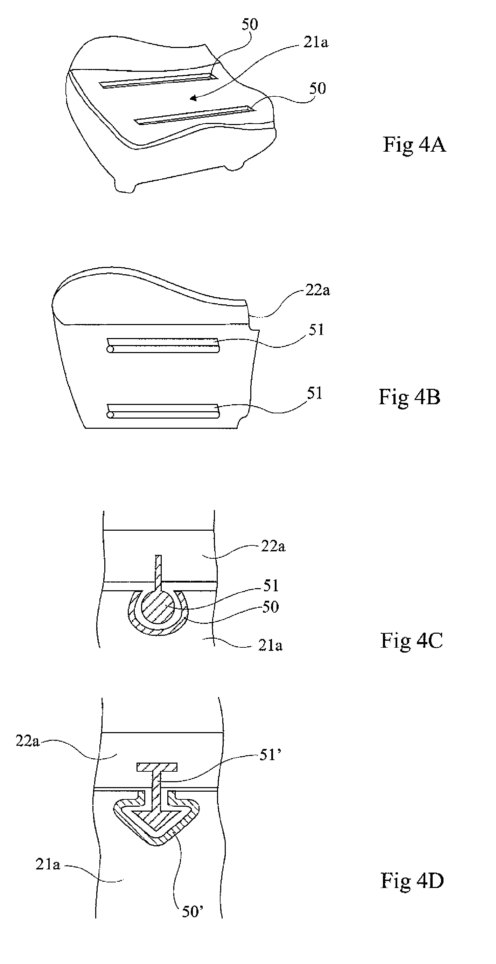

L'élément 22 est destiné à être rapporté (figure 2C) sur le bloc 21 pour obtenir la garniture finale de l'élément 2. La fixation de l'élément 22 sur le bloc 21 s'effectue, par exemple, par bandes auto-agrippantes (non représentées), ce qui facilite son remplacement en cas d'usure ou de défaut. En variante, l'élément 22 est collé ou clipé au bloc 21. Des exemples de fixation par clip seront décrits ultérieurement en relation avec les figures 4A à 4D.

Selon une autre variante non représentée, des rembordements latéraux ou jupe participent à la tenue de l'élément 22 sur le bloc 21. De tels rembordements peuvent être cousus aux bords de l'élément 22 ou être formés de prolongements latéraux souples.

En l'absence de rembordements latéraux, les faces latérales du bloc 21 sont par exemple coiffées de bandes de finition, collées ou fixées par tout autre moyen usuel. Les rembordements latéraux ou les bandes de finition sont fixés à l'armature du siège par des moyens usuels.

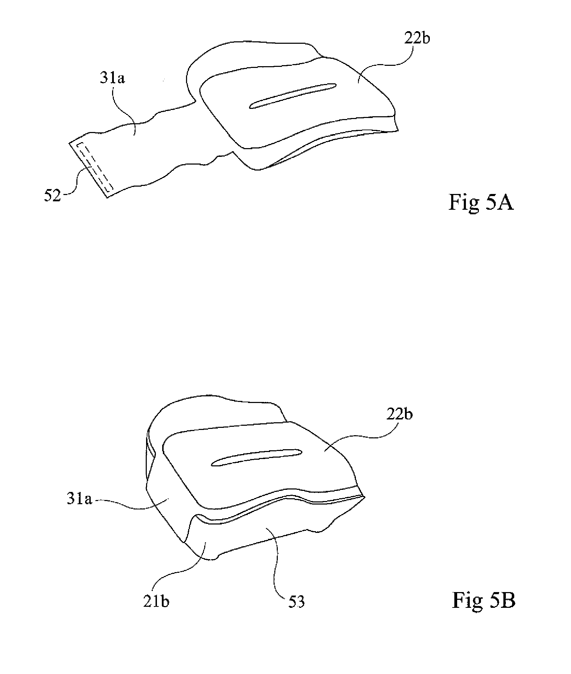

Un exemple de tenue de l'élément de couverture sur le bloc support grâce à un prolongement d'une coiffe textile ou analogue de finition sera exposé ultérieurement en relation avec les figures 5A et 5B.

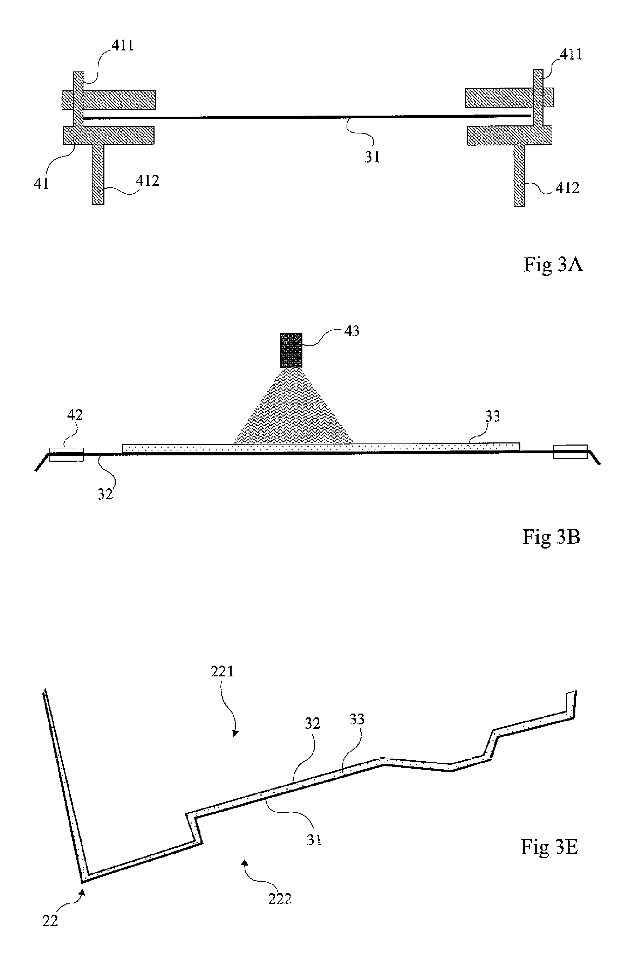

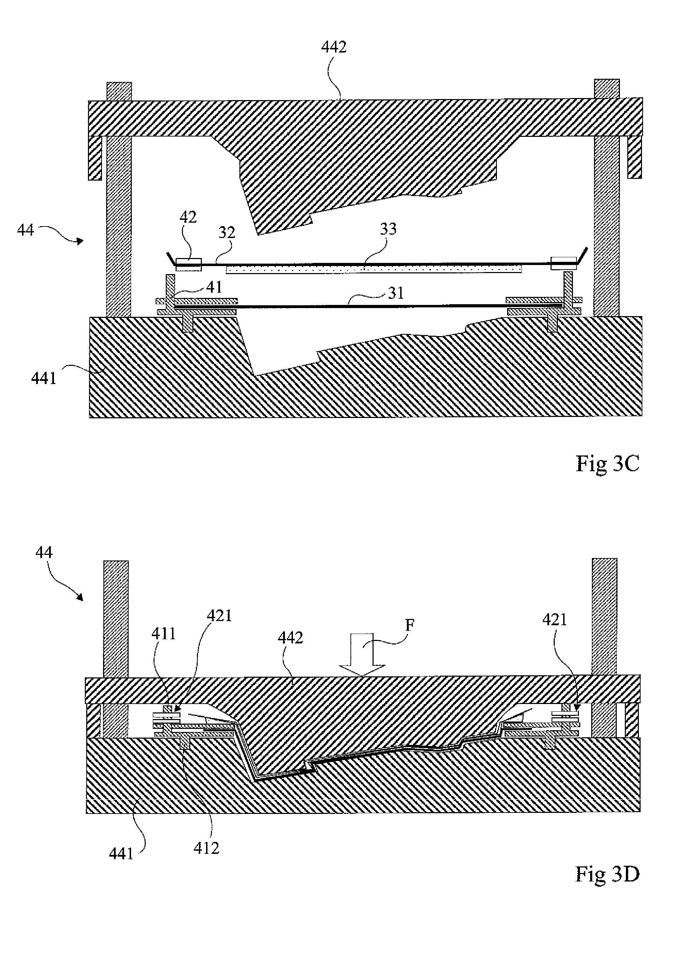

Les figures 3A, 3B, 3C, 3D et 3E illustrent un exemple de réalisation d'un élément 22 de couverture d'une garniture d'élément de siège. Ces figures sont des vues en coupe à différentes étapes de fabrication d'un élément 22.

Comme l'illustre la figure 3A, une pièce textile 31 (ou une pièce en peau ou en matière synthétique), destinée à former la face apparente de l'élément de couverture, est tendue dans un cadre 41.

Séparément (figure 3B), un substrat 32 en polypropylène est tendu sur un cadre support 42 et de la mousse 33 est pulvérisée à l'aide d'un outil de pulvérisation 43 sur une face du substrat 32. On peut utiliser un processus connu de pulvérisation de mousse sur des pièces textiles (tissées ou non), en peau ou en matière synthétique. Le substrat 32 est souple et présente une épaisseur relativement faible par rapport à l'épaisseur de mousse 33 pulvérisée.

Puis (figure 3C), le substrat revêtu de mousse est rapporté sur la pièce 31, face mousse contre textile, dans une presse 44 dont la matrice 441 et le poinçon 442 définissent les formes souhaitées pour l'élément 22.

L'ensemble est alors soumis à un formage à froid qui consiste à appliquer une pression (flèche F, figure 3D) alors que la mousse 33 est à l'état visqueux.

Les cadres 41 et 42 coopèrent pour assurer le positionnement des éléments les uns par rapport aux autres lors du pressage. Par exemple, le cadre 42 comporte des ouvertures 421 (figure 3D) coopérant avec des tiges 411 du cadre 41. De façon similaire, le cadre 41 comporte des éléments 412 d'alignement avec la matrice 441.

La figure 3E illustre la forme finale obtenue de l'élément de couverture. La face 221, côté substrat 32, est fonction de la face apparente 211 (figure 2A) du bloc de mousse 21 pour s'y adapter. Elle peut donc être la même pour différents types d'éléments de siège. La face avant 222 (apparente) de l'élément 22 comporte les rappels de style souhaités pour l'élément de siège.

L'élément de couverture 22 présente, par exemple, une épaisseur non nécessairement uniforme comprise entre 1 et 50 millimètres, de préférence entre 10 et 35 millimètres, à comparer aux quelques millimètres des coiffes textiles revêtues de mousse. L'épaisseur peut en outre varier selon les zones de l'élément de couverture.

Une fois formé, l'élément 22 est relativement rigide, c'est-à-dire que, grâce à l'épaisseur de mousse, il conserve la forme donnée par la presse.

Le recours à un élément de couverture 22 séparé, rapporté sur un bloc de mousse standard 21 présente plusieurs avantages.

Tout d'abord, un même bloc 21 de mousse support peut être utilisé pour différentes familles de sièges pour lesquelles des rappels de forme et de style différents sont souhaités.

De plus, on peut prévoir des densités de mousse différentes dans l'élément fabriqué. En particulier, il est désormais possible, grâce à l'élément de couverture ayant une épaisseur relativement importante, de conférer à la garniture d'éléments de siège réalisée des densités différentes selon les parties de cet élément. Cet avantage vient en supplément de la possibilité de réaliser un bloc en mousse d'une première dureté et un élément de couverture d'une dureté différente.

Un autre avantage est que la préformation de l'élément de couverture facilite son positionnement sur le bloc support.

Un autre avantage est que l'obtention de l'aspect final ne nécessite aucune reprise du bloc support 21. L'élément de couverture définit donc non seulement la forme d'au moins une face apparente (typiquement le dessus de l'assise ou l'avant du dossier) de l'élément de siège, mais également la finition d'au moins cette face apparente.

Les figures 4A à 4D illustrent un mode de fixation par clip d'un élément de couverture 22a sur un bloc support 21a. La figure 4A est une vue de dessus du bloc support 21a. La figure 4B est une vue de dessous de l'élément de couverture 22a. La figure 4C est une coupe schématique du système de clip. La figure 4D est une coupe schématique d'une variante de clips.

Selon cet exemple, une ou préférentiellement plusieurs réglettes creuses en matière plastique 50 formant une première partie (par exemple, femelle) d'un système de clip sont surmoulées dans le bloc support 21a. La technique de surmoulage d'un premier élément d'assemblage sur un bloc de mousse est en elle-même connue. Elle est habituellement utilisée pour intégrer dans la face supérieure d'une matelassure, des lignes d'accrochage de la coiffe en suivant des lignes rappels de styles. Ici, ces réglettes 50 sont disposées au fond d'un moule d'obtention du bloc support en mousse suivant les zones d'accroche souhaitées (par exemple deux lignes parallèles comme illustré par la figure 4A).

Côté élément de couverture 22a (figure 4B), les parties correspondantes (mâle), par exemple des barrettes 51 du système de clip sont collées ou surmoulées en face inférieure (envers), c'est-à-dire côté mousse 33 de l'élément de couverture 22a.

La figure 4C est une coupe schématique du système de clip illustrant la section arrondie de la réglette 50 et la section correspondante de la barrette 51. Dans l'exemple des figures 4A à 4C, on suppose un système de clip continu.

La figure 4D illustre un autre exemple de système dans lequel des clips ponctuels 51' en queue de sapin sont fixés (surmoulés) à l'envers de l'élément de couverture 22a et coopèrent avec des gorges ou éléments ponctuels correspondant 50' du bloc 22a.

Les figures 5A et 5B illustrent un autre mode de maintien d'un élément de couverture sur un bloc support. Ce mode de maintien ne requiert aucun élément de fixation côté bloc support et utilise des prolongements souples (sans mousse) de l'élément de couverture pour définir un ou plusieurs rabats enveloppant au moins partiellement le bloc support.

La figure 5A est une vue en perspective de l'élément de couverture 22b. La figure 5B est une vue en perspective du bloc support 21b surmonté de l'élément de couverture 22b.

L'élément 22b est prolongé vers l'avant d'une portion 31a de la couche textile, synthétique ou en peau, destinée à entourer le bloc support et à être attachée en face inférieure de celui-ci, par exemple par une bande 52 d'un système auto-agrippant. Ce mode de réalisation est plus particulièrement destiné au cas où des rembordements 53 du bloc support 21b sont déjà revêtus d'un matériau de finition (par exemple textile). Selon une variante non représentée, l'élément 22b est prolongé latéralement et vers l'avant de portions de la couche textile à la manière d'un sac. Le bloc support est alors engagé dans cette forme de sac, par exemple cousu en face inférieure.

Des modes de réalisation ont été décrits. Diverses variantes et modifications apparaîtront à l'homme de l'art. En particulier, bien que l'invention ait été décrite en relation avec un exemple de garniture pour assise de siège, elle s'applique plus généralement à tout élément de siège. De plus, la répartition entre l'épaisseur conférée au bloc en mousse support et à l'élément de couverture peut varier selon les gammes de siège. En outre, la mise en oeuvre de l'invention est à la portée de l'homme du métier à partir des indications fonctionnelles données ci-dessus. En particulier, le choix des mousses adaptées au formage à froid dépend essentiellement de la densité de la dureté souhaitée. Enfin, la garniture réalisée peut être avec ou sans jupe.

## Revendications

1. Procédé de réalisation d'une garniture d'un élément (2) de siège (1) pour véhicule automobile, dans lequel
un bloc support en mousse (21) est réalisé pour s'adapter à un élément d'armature ;
un élément de couverture (22) est réalisé par formage à froid d'une mousse (33) pulvérisée sur un substrat (32) en polypropylène et rapportée à l'envers d'un matériau textile, en peau ou en matière synthétique (31), pour définir la forme apparente de l'élément de siège, le formage à froid consistant à appliquer une pression alors que la mousse est à l'état visqueux; et
l'élément de couverture est rapporté sur le bloc support.

2. Procédé selon la revendication 1, dans lequel l'élément de couverture (22) est fixé au bloc support (21) par des moyens auto-agrippants.

3. Procédé selon la revendication 1, dans lequel l'élément de couverture (22a) est fixé au bloc support (21a) par des clips (51, 51') reçus dans des réglettes adaptées (50) surmoulées dans le bloc support.

4. Procédé selon la revendication 1, dans lequel le matériau textile en peau ou en matière synthétique (31) de l'élément de couverture (22b) enveloppe au moins partiellement le bloc support (21b).

5. Procédé selon l'une quelconque des revendications 1 à 4, dans lequel l'élément de couverture (22) comporte des mousses ayant des densités et/ou des duretés différentes.

6. Garniture d'un élément de siège pour véhicule automobile, réalisée par la mise en oeuvre du procédé conforme à l'une quelconque des revendications 1 à 5, comportant :
un bloc support en mousse destiné à s'adapter à un élément d'armature du siège ; et
un élément de couverture (22) définissant la forme et la finition d'au moins une face apparente de l'élément de siège, ledit élément de couverture étant rapporté sur le bloc support et étant réalisé par formage à froid d'une mousse (33) pulvérisée sur un substrat (32) en polypropylène et rapportée à l'envers d'un matériau textile, en peau ou en matière synthétique (31).

7. Garniture selon la revendication 6, dans laquelle ledit élément de couverture comporte des éléments de fixation destinés à coopérer avec des éléments correspondants portés par le bloc support.

8. Garniture selon la revendication 6 ou dans laquelle l'élément de couverture (22) présente une épaisseur non uniforme comprise entre 1 et 50 mm.

9. Garniture selon l'une quelconque des revendications 6 à 8, dans laquelle l'élément de couverture (22) comporte des moyens autoagrippants de fixation au bloc support (21).

10. Garniture selon l'une quelconque des revendications 6 à 9, dans laquelle l'élément de couverture (22a) comporte des clips (51, 51') destinés à coopérer avec des réglettes (50) surmoulées dans le bloc support (21a).

11. Garniture selon l'une quelconque des revendications 6 à 10, dans laquelle le matériau textile en peau ou en matière synthétique (31) de l'élément de couverture (22b) enveloppe au moins partiellement le bloc support (21b).

12. Garniture selon l'une quelconque des revendications 6 à 11, dans laquelle l'élément de couverture (22) comporte des mousses ayant des densités et/ou des duretés différentes.

13. Garniture selon l'une quelconque des revendications 6 à 12, dans laquelle le bloc support (21) comporte une face (211) adaptée à plusieurs éléments de couverture ayant des faces apparentes (222) de formes différentes.

14. Siège pour véhicule automobile comportant au moins une garniture conforme à l'une quelconque des revendications 6 à 13.

## Patentansprüche

1. Verfahren zur Herstellung eines Polsterelements (2) eines Fahrzeugsitzes (1) **dadurch gekennzeichnet, dass**:
eine Trageinheit aus Schaum (21) für das Anpassen an ein Rahmenelement hergestellt wird;
ein Abdeckelement (22) durch Kaltformung eines Schaums (33) hergestellt wird, wobei der Schaum auf ein Substrat aus Polypropylen (32) aufgesprüht und auf die Rückseite eines Textilmaterials in Form von Leder oder eines synthetischen Stoffes (31) aufgebracht wird, um die sichtbare Form des Sitzelementes festzulegen, wobei beim Kaltformen Druck aufgebracht wird, sodass der Schaum einen viskosen Zustand aufweist; und
wobei das Abdeckelement an der Trageinheit befestigt ist.

2. Verfahren nach Anspruch 1 **dadurch gekennzeichnet, dass** das Abdeckelement (22) an der Trageinheit (21) durch selbsthaltende Mittel angebracht ist.

3. Verfahren nach Anspruch 1 **dadurch gekennzeichnet, dass** das Abdeckelement (22a) an der Trageinheit (21a) durch Klammerelemente (51,51') befestigt ist, die von Führungsstreifen (50) aufgenommen werden, die in die Trageinheit eingelassen sind.

4. Verfahren nach Anspruch 1 **dadurch gekennzeichnet, dass** das Textilmaterial (31) des Abdeckelements (22b) in Form von Leder oder eines synthetischen Stoffes zumindest teilweise die Trageinheit bedeckt (21 b).

5. Verfahren nach einem der Ansprüche 1 bis 4 **dadurch gekennzeichnet, dass** das Abdeckelement (22) Schäume mit unterschiedlichen Dichten und/oder Härten umfasst.

6. Polsterelement für einen Fahrzeugsitz, hergestellt durch die Anwendung des Verfahrens nach einem der Ansprüche 1 bis 5, umfassend:
eine Trageinheit aus Schaum für das Anpassen in ein Sitzrahmenelement; und
ein Abdeckelement (22), das die Form und Fertigstellung von wenigstens einer sichtbaren Oberfläche des Polsterelements festlegt und welches an der Trageinheit befestigt ist und wobei das Abdeckelement durch Kaltverformung eines Schaums (33) hergestellt wird, wobei der Schaum auf ein Substrat aus Polypropylen (32) aufgesprüht und auf die Rückseite eines Textilmaterials (31) in Form von Leder oder eines synthetischen Stoffes aufgebracht wird.

7. Polsterelement nach Anspruch 6 **dadurch gekennzeichnet, dass** das Abdeckelement Befestigungselemente aufweist, die in entsprechenden, in der Trageinheit befestigten Elementen greifen.

8. Polsterelement nach Anspruch 6 **dadurch gekennzeichnet, dass** das Abdeckelement (22) eine ungleichmäßige Dickenverteilung aufweist, die zwischen 1 mm und 50mm variiert.

9. Polsterelement nach einem der Ansprüche 6 bis 8 **dadurch gekennzeichnet, dass** das Abdeckelement (22) ein selbsthaltendes Mittel für eine Befestigung an der Trageinheit (21) umfasst.

10. Polsterelement nach einem der Ansprüche 6 bis 9 **dadurch gekennzeichnet, dass** das Abdeckelement (22a) Klammerelemente (51, 51') umfasst, die in die, in der Trageinheit (21a) eingelassenen Führungsstreifen (50) greifen.

11. Polsterelement nach einem der Ansprüche 6 bis 10 **dadurch gekennzeichnet, dass** das Textilmaterial des Abdeckelements (22b) in Form von Leder oder eines synthetischen Stoffes (31) zumindest teilweise die Trageinheit (21 b) bedeckt.

12. Polsterelement nach einem der Ansprüche 6 bis 11 **dadurch gekennzeichnet, dass** das Abdeckelement (22) Schäume mit unterschiedlichen Dichten und/oder Härten umfasst.

13. Polsterelement nach einem der Ansprüche 6 bis 12 **dadurch gekennzeichnet, dass** die Trageinheit (21) eine Oberfläche (211) aufweist, wobei die Oberfläche an einer Vielzahl von Abdeckelementen mit sichtbaren Oberflächen (222) unterschiedlicher Formen angebracht ist.

14. Fahrzeugsitz umfassend wenigstens ein Polsterelement nach den Ansprüchen 6 bis 13.

## Claims

1. A method for forming upholstery for an element (2) of a motor vehicle seat (1), wherein:
a foam support block (21) is produced to fit a frame element;
a cover element (22) is created by cold-forming of a foam (33) sprayed onto a polypropylene substrate (32) and attached to the reverse side of a textile, leather or synthetic material (31) to define the visible shape of the seat element, the cold-forming consisting in applying a pressure while the foam is in a viscous state; and
the cover element is attached to the support block.

2. The method of claim 1, wherein the cover element (22) is attached to the support block (21) by self-fastening means.

3. The method of claim 1, wherein the cover element (22a) is attached to the support block (21a) by clips (51, 51') received in adapted guide strips (50) overmolded in the support block.

4. The method of claim 1, wherein the textile, leather or synthetic material (31) of the cover element (22b) at least partially covers the support block (21b).

5. The method of any of claims 1 to 4, wherein the cover element (22) comprises foams having different densities and/or hardnesses.

6. Upholstery for a motor vehicle seat, made by implementation of the method of any of claims 1 to 5, comprising:
a foam support block intended to fit a seat frame element; and
a cover element (22) defining the shape and the finishing of at least one visible surface of the seat element, said cover element being attached to the support block and being created by cold-forming of a foam (33) sprayed onto a polypropylene substrate (32) and placed on the reverse side of a textile, leather or synthetic material (31).

7. The upholstery of claim 6, wherein said cover element comprises fastening elements intended to engage with corresponding elements supported by the support block.

8. The upholstery of claim 6, wherein the cover element (22) has a non-uniform thickness ranging between 1 and 50 mm.

9. The upholstery of any of claims 6 to 8, wherein the cover element (22) comprises self-fastening means for fastening to the support block (21).

10. The upholstery of any of claims 6 to 9, wherein the cover element (22a) comprises clips (51, 51') intended to engage with guide strips (50) overmolded in the support block (21a).

11. The upholstery of any of claims 6 to 10, wherein the textile, leather or synthetic material (31) of the cover element (22b) at least partially covers the support block (21b).

12. The upholstery of any of claims 6 to 11, wherein the cover element (22) comprises foams having different densities and/or hardnesses.

13. The upholstery of any of claims 6 to 12, wherein the support block (21) comprises a surface (211) adapted to a plurality of cover elements having visible surfaces (222) of different shapes.

14. A motor vehicle seat comprising at least one piece of upholstery of any of claims 6 to 13.
